# FASCICULE DE BREVET EUROPEEN

(11) **EP 1 995 649 B1**
(45) Date de publication et mention de la délivrance du brevet: **10.07.2013**
(21) Numéro de dépôt: 08405140.8
(22) Date de dépôt: 21.05.2008
(51) Int. Cl.: G04B 9/00, G04B 13/00, F16H 13/08, F16H 13/14

(54) **Différentiel à billes, notamment pour un indicateur de réserve de marche d'un mouvement horloger mécanique**
Kugeldifferential, insbesondere für Gangreserveanzeige eines mechanischen Uhrwerks
Ball differential, in particular for a working reserve indicator of a mechanical timepiece movement

(30) Priorité: 25.05.2007 CH 8412007
(43) Date de publication de la demande: 26.11.2008
(73) Titulaire: MPS Micro Precision Systems AG, 2500 Bienne 8 (CH)
(72) Inventeur: Laager, Alain, CH-2603 Pery (CH); Chautems, Frédéric, CH-2900 Porrentruy (FR)
(74) Mandataire: Nithardt, Roland

(56) Documents cités:
- WO-A-2006/096984
- CH-A- 294 760
- GB-A- 191 300 515
- US-A- 2 698 066

## Description

### Domaine technique

La présente invention concerne un différentiel à billes, notamment pour un indicateur de réserve de marche d'un mouvement horloger mécanique, comportant un roulement à billes à quatre points de contact comprenant un noyau central, une bague intérieure et une cage à billes.

### Technique antérieure

Les montres à mouvement horloger mécanique comportent habituellement une jauge permettant d'indiquer à l'utilisateur le temps restant avant un remontage. Elles sont également équipées d'un dispositif, par exemple un différentiel à billes, qui autorise le glissement à vide d'une bague lorsque le barillet est plein, ce qui évite d'appliquer des contraintes exagérées et supprime le risque de déformations ou de cassures de certains composants du mouvement.

Un indicateur de développement du ressort est décrit par le brevet suisse N° 294 760. Cet indicateur comporte un différentiel à billes comprenant deux plateaux et trois billes montées dans une cage à billes et une rondelle ressort qui applique une précontrainte. II s'agit d'un système axial, encombrant et peu sûr.

Un autre dispositif connu est décrit par la demande de brevet européen publiée sous le N° EP 1 074 897 A1 qui décrit un dispositif indicateur de réserve de marche d'une montre à remontage manuel ou automatique, comportant un engrenage différentiel entraîné par un rouage d'armage couplé au barillet et dont la sortie entraîne un rouage d'affichage. Comme précédemment, ce dispositif est axial, avec les inconvénients constructifs que ces systèmes axiaux génèrent.

On connaît également par le brevet anglais GB 00515 et la demande WO 2006096984 des différentiels comportant un roulement à billes à quatre points de contact. Ces différentiels sont toutefois de conception totalement différente de celle du différentiel de la présente invention et ne pourraient pas être intégrés dans les mouvements de montre actuels.

### Exposé de l'invention

La présente invention se propose donc de pallier les inconvénients des dispositifs différentiels classiques en réalisant un différentiel moins encombrant, facile à intégrer à divers mouvements en permettant d'entrer par divers engrenages du mouvement.

A cet effet, le différentiel à billes selon l'invention, tel que défini en préambule, est caractérisé en ce que ledit noyau central comporte une première denture qui engrène une première roue dentée, en ce que ladite bague intérieure comporte une deuxième denture qui engrène une deuxième roue dentée, et en ce que ladite cage à billes comporte une troisième denture qui engrène une troisième roue dentée, chacune desdites première, deuxième et troisième roues dentées étant agencée pour assurer indifféremment la fonction d'entrée, de sortie et de blocage du différentiel.

De façon avantageuse, lesdites première, deuxième et troisième roues dentées ont des axes parallèles à l'axe du roulement à billes et sont identiques.

Selon une forme de réalisation avantageuse dans laquelle le roulement à billes comporte un cône de serrage monté sur le noyau central, ledit roulement comporte de préférence un élément ressort agencé pour exercer une contrainte mécanique sur ledit cône de serrage.

Ledit élément ressort est avantageusement une rondelle en appui sur le cône de serrage par son côté intérieur et précontrainte par rabattement d'un rebord, ménagé sur la face supérieure du noyau central, sur son bord périphérique.

De préférence, le noyau central peut comporter un prolongement latéral dont l'extrémité est pourvue de la première denture qui engrène la première roue dentée et la cage à billes peut comporter un prolongement pourvu d'un renflement qui est en appui sur la bague intérieure, et dont l'extrémité est pourvue de la troisième denture qui engrène la troisième roue dentée.

### Description sommaire des dessins

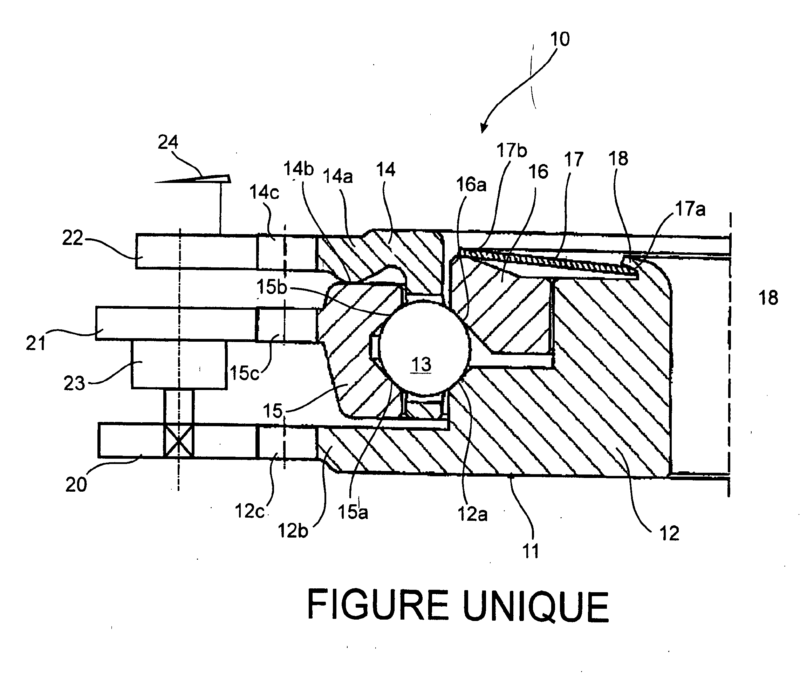

La présente invention et ses avantages seront mieux compris à la lecture de la description détaillée d'une mise en oeuvre préférée du différentiel de l'invention, en référence au dessin annexé donné à titre indicatif et non limitatif, dans lequel:
la figure unique est une vue en coupe représentant le différentiel selon l'invention.

### Meilleure manière de réaliser l'invention

En référence à la figure, le différentiel 10 tel que représenté comporte un roulement à billes 11 formé d'un noyau central 12 qui définit un premier point de contact 12a pour des billes 13 logées dans une cage à billes 14, une bague intérieure 15 qui définit deux autres points de contact 15a et 15b pour les billes 13, et un cône de serrage 16 qui définit un quatrième point de contact 16a pour les billes 13. Le cône de serrage 16 est soumis à une contrainte mécanique exercée par un élément ressort 17, par exemple une rondelle ressort ou tout autre élément assurant la même fonction. Cet élément ressort 17 comporte un bord intérieur 17b, en appui sur le cône de serrage 16, et un bord périphérique 17a sur lequel vient se rabattre un rebord 18, ou des ergots, ménagé sur la surface supérieure du noyau central 12, en appliquant une précontrainte audit élément 17. La mise en place de l'élément ressort 17 peut également se faire par soudage, fixation par vis, collage ou similaire, du bord 17a sur le noyau central 12. Un tel roulement à billes 11 à quatre points de contact présente une construction très plate, ce qui permet la réalisation d'un différentiel de faible encombrement.

Dans l'exemple représenté, le noyau central 12 comporte un prolongement latéral 12b dont l'extrémité est pourvue d'une première denture 12c qui engrène une première roue dentée 20 dont la fonction sera définie ci-dessous. La bague intérieure 15 comporte une deuxième denture 15c qui engrène une deuxième roue dentée 21, de préférence identique à la roue dentée 20. La cage à billes 14 est également pourvue d'un prolongement 14a, éventuellement pourvu d'un renflement 14b qui est en appui sur la bague intérieure 15, et d'une troisième denture 14c qui engrène une troisième roue dentée 22, qui peut être identique aux roues dentées 20 et 21.

Le différentiel à billes 10 peut être utilisé comme suit dans une montre à mouvement mécanique comprenant un barillet 23 dont l'arbre de sortie est couplé à la deuxième roue dentée 21. Ce barillet 23 peut par exemple être couplé, par l'intermédiaire d'un pignon non représenté, à la première roue dentée 20. La troisième roue dentée 22 est alors couplée à un indicateur de réserve de marche qui est de préférence une aiguille indicatrice 24 qui coopère avec un cadran approprié (non représenté). Lorsque la première roue dentée 20 tourne, entraînée par le barillet 23, et que la deuxième roue dentée 21 est bloquée, la réserve de marche étant maximale, le rapport des vitesses entre la roue 20 et la roue 21 peut être de 0.45. Les autres configurations entre la roue menante, menée et bloquée peuvent donner des rapports de vitesses de 0.55, 0.81 et 1.24.

Le couple de glissement entre les deux roues 20 et 21, si l'une des roues est bloquée, est dépendant de la précontrainte exercée par l'élément ressort 17.

Les trois roues dentées 20, 21 et 22 peuvent être interchangées d'un point de vue fonctionnel, de sorte que l'entrée, qui est la première roue 20 couplée au barillet 23 dans le montage décrit ci-dessus, peut être remplacée par la deuxième roue 21 ou la troisième roue 22. Chaque roue dentée peut être utilisée pour remplir chacune des fonctions d'entrée, de sortie et de blocage. L'avantage de ce dispositif réside notamment dans sa compacité obtenue par le roulement à billes 11 du type à quatre points de contact qui permet une construction d'un diamètre de l'ordre de 4mm et d'une épaisseur de l'ordre de 1mm. On utilisera de préférence un roulement de ce type comportant des billes en céramique, ce qui permet d'éviter toute lubrification et autorise un stockage de longue durée sans aucun entretien. Toutes les entrées et toutes les sorties sont radiales et les trois roues dentées ont de préférence le même diamètre. Le dispositif est compact et ne se démonte pas lors d'une manipulation. Aucune force extérieure n'est à appliquer sur le mécanisme pour le faire fonctionner correctement étant donné que le ressort de précontrainte est intégré. Cette précontrainte est appliquée sur des pièces non mobiles de sorte qu'aucune usure d'une pièce en mouvement n'est à craindre.

## Revendications

1. Différentiel à billes (10), notamment pour un indicateur de réserve de marche d'un mouvement horloger mécanique, comportant un roulement à billes (11) à quatre points de contact comprenant un noyau central (12), une bague intérieure (15) et une cage à billes (14), **caractérisé en ce que** ledit noyau central (12) comporte une première denture (12c) qui engrène une première roue dentée (20), **en ce que** ladite bague intérieure (15) comporte une deuxième denture (15c) qui engrène une deuxième roue dentée (21), et **en ce que** ladite cage à billes (14) comporte une troisième denture (14c) qui engrène une troisième roue dentée (22), chacune desdites première, deuxième et troisième roues dentées (20, 21, 22) étant agencée pour assurer indifféremment la fonction d'entrée, de sortie et de blocage du différentiel (10).

2. Différentiel selon la revendication 1, **caractérisé en ce que** lesdites première, deuxième et troisième roues dentées (20, 21, 22) ont des axes parallèles à l'axe du roulement à billes (11).

3. Différentiel selon la revendication 1, **caractérisé en ce que** lesdites première, deuxième et troisième roues dentées (20, 21, 22) sont identiques.

4. Différentiel selon la revendication 1, dans lequel le roulement à billes (11) comporte un cône de serrage (16) monté sur le noyau central (12), **caractérisé en ce que** ledit roulement (11) comporte un élément ressort - (17) agencé pour exercer une contrainte mécanique sur ledit cône de serrage (16).

5. Différentiel selon la revendication 4, **caractérisé en ce que** ledit élément ressort (17) est une rondelle en appui sur le cône de serrage (16) par son côté intérieur (17b) et précontrainte par rabattement d'un rebord (18), ménagé sur la surface supérieure du noyau central (12), sur son bord périphérique (17a).

6. Différentiel selon la revendication 1, **caractérisée en ce que** le noyau central (12) comporte un prolongement latéral (12b) dont l'extrémité est pourvue de la première denture (12c) qui engrène la première roue dentée (20).

7. Différentiel selon la revendication 1, **caractérisée en ce que** la cage à billes (14) comporte un prolongement (14a) qui est en appui sur la bague intérieure (15), et dont l'extrémité (14a) est pourvue de la troisième denture (14c) qui engrène la troisième roue dentée (22).

## Patentansprüche

1. Kugeldifferential (10), insbesondere für eine Gangreserveanzeige eines mechanischen Uhrwerks, wobei das Differential ein Kugellager (11) mit vier Kontaktpunkten umfasst, das einen zentralen Kern (12), einen inneren Ring (15) und einen Kugelkäfig (14) umfasst,
**dadurch gekennzeichnet, dass**
der zentrale Kern (12) eine erste Verzahnung (12c) umfasst, die mit einem ersten Zahnrad (20) in Eingriff steht, dass der innere Ring (15) eine zweite Verzahnung (15c) umfasst, die mit einem zweiten Zahnrad (21) in Eingriff steht, und dass der Kugelkäfig (14) eine dritte Verzahnung (14c) umfasst, die mit einem dritten Zahnrad (22) in Eingriff steht, wobei jedes des ersten, des zweiten und des dritten Zahnrads (20, 21, 22) dazu eingerichtet ist, unabhängig die Eingangsfunktion, die Ausgangsfunktion und die Sperrfunktion des Differentials (10) sicherzustellen.

2. Differential nach Anspruch 1,
**dadurch gekennzeichnet, dass**
das erste, das zweite und das dritte Zahnrad (20, 21, 22) Achsen haben, die zu der Achse des Kugellagers (11) parallel sind.

3. Differential nach Anspruch 1,
**dadurch gekennzeichnet, dass**
das erste, das zweite und das dritte Zahnrad (20, 21, 22) identisch sind.

4. Differential nach Anspruch 1,
wobei das Kugellager (11) einen Spannkegel (16) umfasst, der auf dem zentralen Kern (12) montiert ist,
**dadurch gekennzeichnet, dass**
das Lager (11) ein Federelement (17) umfasst, das dazu eingerichtet ist, eine mechanische Belastung auf den Spannkegel (16) auszuüben.

5. Differential nach Anspruch 4,
**dadurch gekennzeichnet, dass**
das Federelement (17) eine Scheibe ist, die durch ihre Innenseite (17b) auf dem Spannkegel (16) aufliegt und durch Absenkung eines Rands, der auf der oberen Fläche des zentralen Kerns (12) angeordnet ist, auf dessen Umfangsrand vorgespannt wird.

6. Differential nach Anspruch 1,
**dadurch gekennzeichnet, dass**
der zentrale Kern (12) eine seitliche Verlängerung (12b) umfasst, deren Ende mit der ersten Verzahnung (12c) versehen ist, die mit dem ersten Zahnrad (20) in Eingriff steht.

7. Differential nach Anspruch 1,
**dadurch gekennzeichnet, dass**
der Kugelkäfig (14) eine Verlängerung (14a) umfasst, die auf dem inneren Ring (15) aufliegt und deren Ende (14a) mit der dritten Verzahnung (14c) versehen ist, die mit dem dritten Zahnrad (22) in Eingriff steht.

## Claims

1. Differential ball bearing (10), especially for a working reserve indicator of a mechanical timepiece movement, including a four contact point ball bearing (11) comprising a central core (12), an inner ring (15) and a ball cage (14), **characterised in that** the said central core (12) includes a first set of teeth (12c) which mesh with a first cog wheel (20), **in that** the said inner ring (15) includes a second set of teeth (15c) which mesh with a second cog wheel (21), and **in that** the said ball cage (14) includes a third set of teeth (14c) which mesh with a third cog wheel (22), each of the said first, second and third cog wheels (20, 21, 22) being arranged to interchangeably provide the input function, the output function and the locking of the differential (10).

2. Differential according to claim 1, **characterised in that** the said first, second and third cog wheels (20, 21, 22) have their axes parallel to the axis of the ball bearing (11).

3. Differential according to claim 1, **characterised in that** the said first, second and third cog wheels (20, 21, 22) are identical.

4. Differential according to claim 1, in which the ball bearing (11) includes a clamping cone (16) mounted on the central core (12), **characterised in that** the said bearing (11) includes a spring element (17) arranged to exert a mechanical stress on the said clamping cone (16).

5. Differential according to claim 4, **characterised in that** the said spring element (17) is a washer in engagement with the clamping cone (16) at its internal edge (17b) and pre-stressed by a folded-back flange (18), provided on the outer surface of the central core (12), at its peripheral edge (17a).

6. Differential according to claim 1, **characterised in that** the central core (12) includes a lateral extension (12b) whose end is provided with the first set of teeth (12c) which mesh with the first cog wheel (20).

7. Differential according to claim 1, **characterised in that** the ball cage (14) includes an extension (14a) which is in engagement with the inner ring (15), and whose end (14a) is provided with the third set of teeth (14c) which mesh with the third cog wheel (22).
